(19) Europäisches Patentamt / European Patent Office / Office européen des brevets

(11) **EP 3 617 909 A1**

(12) **EUROPEAN PATENT APPLICATION**
published in accordance with Art. 153(4) EPC

(43) Date of publication:
**04.03.2020 Bulletin 2020/10**

(51) Int Cl.:
*G06F 17/30* (2006.01)          *G06Q 30/02* (2012.01)

(21) Application number: **17911294.1**

(86) International application number:
**PCT/CN2017/119844**

(22) Date of filing: **29.12.2017**

(87) International publication number:
**WO 2018/214503 (29.11.2018 Gazette 2018/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **23.05.2017 CN 201710370473**

(71) Applicant: **Beijing Sankuai Online Technology Co., Ltd**
**Beijing 100080 (CN)**

(72) Inventors:
• **ZHANG, Qin**
  **Beijing 100080 (CN)**
• **YANG, Yifan**
  **Beijing 100080 (CN)**
• **ZHANG, Gong**
  **Beijing 100080 (CN)**

(74) Representative: **Kraus & Weisert**
**Patentanwälte PartGmbB**
**Thomas-Wimmer-Ring 15**
**80539 München (DE)**

(54) **METHOD AND DEVICE FOR SETTING SAMPLE WEIGHT, AND ELECTRONIC APPARATUS**

(57)     Provided is a sample weight setting method. The method includes: values of popularity indicators of a training sample are obtained; a single popularity indicator weight of the popularity indicator corresponding to the training sample is determined based on a value of each popularity indicator; and a sample weight of the training sample is determined based on the single popularity indicator weights corresponding to all the popularity indicators.

FIG. 1

**Description**

**CROSS REFERENCE TO RELATED APPLICATIONS**

This application claims the priority to the Chinese Patent Application No. 201710370473.4, filed on May 23, 2017 and entitled "SAMPLE WEIGHT SETTING METHOD AND DEVICE, AND ELECTRONIC DEVICE ", which is incorporated herein by reference in its entirety.

**TECHNICAL FIELD**

The present application relates to the field of computer technologies, and in particular, to a sample weight setting method and device, and an electronic device.

**BACKGROUND**

Accuracy of services, such as search and recommendation, provided by an O2O platform directly affects intuitive experience brought to a user by the services. Regardless of a service, namely, search or recommendation, a technical means thereof is mostly obtaining a training sample based on existing user behavior logs, and then training a sorting model by using an algorithm. In a process of training a model based on existing training samples, to improve accuracy of the model obtained through the training, usually the samples need to be manually annotated, and manually or automatically filtered, to obtain a sample that is representative to some extent. A sample annotation method is mainly defining, as a positive sample, an interest point that is clicked, and defining, as a negative sample, an interest point that is not clicked. However, for the O2O field, because an interest point has a characteristic such as conspicuous geographic localization or time distribution, interest points are densely distributed in a popular region or a popular time period in which user access traffic is large, and all the interest points are samples of a superior vendor or product. These interest points should be used as positive samples. However, after samples are annotated according to a simple rule, such as whether a sample is clicked, an inconsistency between an annotation and a sample feature inevitably occurs, to be specific, an interest point is annotated as a negative sample, but the interest point should be apparently annotated as a positive sample from the perspective of features.

**SUMMARY**

Embodiments of the present application provide a sample weight setting method, to present an accurate search or recommendation result to a user.

To resolve the foregoing problem, according to a first aspect, an embodiment of the present application provides a sample weight setting method, including: obtaining values of popularity indicators of a training sample; determining, based on a value of each popularity indicator, a single popularity indicator weight of the popularity indicator corresponding to the training sample; and determining a sample weight of the training sample based on the single popularity indicator weights corresponding to all the popularity indicators.

According to a second aspect, an embodiment of the present application provides a sample weight setting device, including: a popularity indicator obtaining module, configured to obtain values of popularity indicators of a training sample; a single popularity indicator weight determining module, configured to determine, based on a value of each popularity indicator, a single popularity indicator weight of the popularity indicator corresponding to the training sample; and a sample weight determining module, configured to determine a sample weight of the training sample based on the single popularity indicator weights corresponding to all the popularity indicators.

According to a third aspect, an embodiment of the present application provides an electronic device, including: a memory; a processor; and computer programs stored in the memory and executable by the processor. The computer programs are executed by the processor to implement the sample weight setting method disclosed in the embodiments of the present application.

According to a fourth aspect, an embodiment of the present application provides a computer readable storage medium, storing computer programs. The computer programs are executed by a processor to implement the sample weight setting method disclosed in the embodiments of the present application.

According to the sample weight setting method disclosed in the embodiments of the present application, the values of the popularity indicators of the training sample are obtained, then the single popularity indicator weight of the popularity indicator corresponding to the training sample is determined based on the value of each popularity indicator, and the sample weight of the training sample is determined based on the single popularity indicator weights corresponding to all the popularity indicators, thereby presenting the accurate search or recommendation result to the user. A sample weight of a sample is set with reference to a popularity indicator, so that a sample weight of a sample in a high-popularity area, time period, or category is properly reduced, thereby improving accuracy of a trained model, and further increasing accuracy of the search or recommendation result presented to the user.

**BRIEF DESCRIPTION OF THE DRAWINGS**

To describe the technical solutions in embodiments of the present application more clearly, the following briefly describes the accompanying drawings required for describing the embodiments or the prior art. Apparently, the accompanying drawings in the following description show merely some embodiments of the present application, and a person of ordinary skill in the art may derive other drawings from these accompanying drawings without creative efforts.

FIG. 1 is a flowchart of a sample weight setting method according to an embodiment of the present application;
FIG. 2 is a flowchart of a sample weight setting method according to another embodiment of the present application;
FIG. 3 is a flowchart of a sample weight setting method according to still another embodiment of the present application;
FIG. 4 is a schematic structural diagram of a sample weight setting device according to an embodiment of the present application;
FIG. 5 is a schematic structural diagram of a sample weight setting device according to another embodiment of the present application.

**DETAILED DESCRIPTION OF THE EMBODIMENTS**

The following clearly and completely describes technical solutions in embodiments of the present application with reference to the accompanying drawings in the embodiments of the present application. Apparently, the described embodiments are some of the embodiments of the present application rather than all of the embodiments. All other embodiments obtained by a person of ordinary skill in the art based on the embodiments of the present application without creative efforts shall fall within the protection scope of the present application.

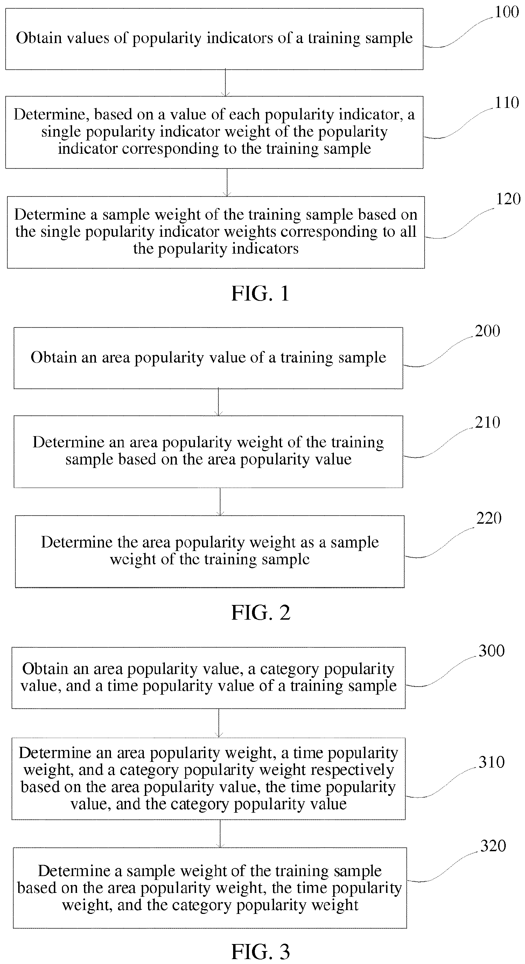

FIG. 1 is a sample weight setting method disclosed according to an embodiment of the present application. As shown in FIG. 1, the method includes step 100 to step 120.

At step 100, values of popularity indicators of a training sample are obtained.

A used sample may be data of logs in a current system or platform, for example, a log of clicking or purchasing commodities by a user on an O2O platform, a log of clicking or browsing commodities by a user or a vendor log in a search system, and the like. During specific implementation, the data of logs is used as a source of sample data. A person skilled in the art is familiar with specific methods of obtaining the data of logs and obtaining the sample data, and details are not described herein again.

The obtained sample data may include a sample feature and sample-associated information. The sample feature may include a feature, such as a vendor star-level score, a comment quantity, a purchase amount, a clicking feedback, or a user preference. The sample-associated information includes: access traffic of a vendor or a product, access time information, geographic location information of the vendor or the product, category information of the vendor or the product, and the like. The sample feature, namely, the training sample, constitutes a feature vector during model training. The sample-associated information determines the value of the popularity indicator of the corresponding training sample. The person skilled in the art is familiar with a specific solution of obtaining the sample feature (namely, the training sample), and details are not described herein again.

During specific implementation, the popularity indicator may be set to one or more of area popularity, time popularity, and category popularity. For example, the popularity indicator may include only the area popularity, or may not only include the area popularity, but also include the category popularity and the time popularity. The training sample is analyzed, to obtain values of area popularity, time popularity, and category popularity of each training sample.

At step 110, a single popularity indicator weight of the popularity indicator corresponding to the training sample is determined based on a value of each popularity indicator.

Each popularity indicator affects a weight of the training sample. During specific implementation, a weight separately calculated based on each popularity indicator is referred to as the single popularity indicator weight. For example, an area popularity weight of the sample is calculated based on a value of an area popularity indicator; a time popularity weight of the sample is calculated based on a value of a time popularity indicator; and a category popularity weight of the sample is calculated based on a value of a category popularity indicator. During specific implementation, a single popularity indicator weight of the training sample corresponding to each popularity indicator is calculated by using a monotonic decreasing function of the popularity indicator. For different popularity indicators, parameters in monotonic decreasing functions may be different, and values of the parameters are determined based on an experiment. During the model training, the weight separately calculated based on each popularity indicator is used as a factor of a sample weight of the sample.

At step 120, a sample weight of the training sample is determined based on the single popularity indicator weights corresponding to all the popularity indicators.

After the corresponding single popularity indicator weight is separately calculated based on each popularity indicator, all the single popularity indicator weights are multiplied, and an obtained product is used as the sample weight of the training sample. In other words, during the model training, the sample weight of the training sample is determined based on a value of a preset popularity indicator. Alternatively, at least one of the single popularity indicator weights is adjusted based on a single popularity indicator importance, and a product of all adjusted single popularity indicator weights is calculated, and the product is used as the sample weight of the training sample. When the single popularity indicator weight is adjusted, if a ratio of a weight of a single popularity indicator to the obtained sample weight suits a preset importance, the weight of the single popularity indicator is not adjusted; or if a ratio of a weight of a single popularity indicator to the obtained sample weight does not suit a preset importance, the weight of the single popularity indicator needs to be adjusted. During specific implementation, the weight of the single popularity indicator is increased or decreased by a proportion, so that a ratio of the adjusted single popularity indicator weight to the sample weight of the training sample suits the single popularity indicator importance.

According to the sample weight setting method disclosed in this embodiment, the values of the popularity indicators of the training sample are obtained, then the single popularity indicator weight of the popularity indicator corresponding to the training sample is determined based on the value of each popularity indicator, and the sample weight of the training sample is determined based on the single popularity indicator weights corresponding to all the popularity indicators, thereby presenting the accurate search or recommendation result to the user. A sample weight of a sample is set with reference to a popularity indicator, so that a sample weight of a sample in a high-popularity area, time period, or category is properly reduced, thereby improving accuracy of a trained model, and further increasing accuracy of the search or recommendation result presented to the user.

FIG. 2 is a sample weight setting method disclosed according to another embodiment of the present application. As shown in FIG. 2, the method includes step 200 to step 220.

During specific implementation, a popularity indicator may be set to one or more of area popularity, time popularity, and category popularity. In this embodiment, an example in which the popularity indicator is the area popularity is used, to describe a method for obtaining a value of the popularity indicator, and a specific process of determining a single popularity indicator weight of a training sample based on the obtained value of the popularity indicator.

At step 200, an area popularity value of a training sample is obtained.

For a specific method for obtaining the training sample, refer to the foregoing embodiment. Details are not described herein again. In this embodiment, obtained sample data may include: a sample feature and sample-associated information. The sample-associated information further includes: access traffic of a vendor or a product, access time information, access behavior, geographic location information of the vendor or the product, category information of the vendor or the product, and the like. During specific implementation, a specific solution for obtaining the values of the area popularity indicators of the training sample is described by using an example in which the geographic location information of the vendor is latitude and longitude coordinates.

During specific implementation, the obtaining an area popularity value of a training sample includes: assigning all training samples to corresponding area blocks based on a geographic location; and determining area popularity of each area block.

First, data structures of all training samples are parsed, and an overall area covered by the training samples is determined based on geographic location information of each training sample; then, the overall area is divided into a corresponding plurality of area blocks according to a preset rule; and finally, the area popularity of each area block is separately determined. During specific implementation, the area popularity value may be represented by using a plurality of types of data, for example, a history access user quantity of an area block, a quantity of vendors in the area block, a history access request quantity of a geographic location in the area block, and the like.

In this embodiment, an example in which an area block division rule is dividing the overall area into neighboring 500 m×500 m area blocks is used. Assuming that a geographic location of a sample is represented by using a latitude and a longitude, for the convenience of calculation, a latitude value and a longitude value of the geographic location of the sample are separately multiplied by 200 and then rounded; and then, latitude values and longitude values of all samples are calculated, and an overall area covered by all the samples is divided into the 500 m×500 m area blocks based on the latitude values and longitude values.

Then, samples are associated with area blocks based on a latitude and longitude value range of each area block and geographic locations of the samples, to further determine all samples associated with each area block, namely, all samples of a geographic location that are located in the area block.

Finally, area popularity of each area block is separately determined based on the samples associated with each area block. Using an example in which a month history access request quantity is used as area popularity, for each area block, an access request quantity within the last month is calculated based on all samples associated with the area block, and the obtained access request quantity is used as area popularity of the area block. During specific implementation, a quantity of samples of clicking and browsing behavior in all the samples associated with the area block is used as the area popularity of the area block; or a quantity of vendors related to all the samples associated with the area block is used as the area popularity of the area block. A specific manner of determining the area popularity of each area block is not limited in the present application.

If all training samples are distributed in M area blocks, M area popularity values $F(lng_j, lat_j)$ corresponding to the M area blocks are obtained, where $1 \leq j \leq M$.

At step 210, an area popularity weight of the training sample is determined based on the area popularity value.

During specific implementation, determining, based on a value of each popularity indicator, a single popularity indicator weight of the popularity indicator corresponding to the training sample includes: determining the area popularity weight of the training sample based on a monotonic decreasing function of area popularity. During specific implementation, a formula for calculating a sample area popularity weight may be represented as a formula 1.

$$\text{Formula 1:} \quad W(x_i) = H(F(lng_j, lat_j)) \propto \frac{F_{avg}}{F(lng_j, lat_j)},$$

where $x_i$ is from $D(lng_j, lat_j)$;
and $F_{avg}$ is an average value of area popularity of all area blocks, and may be calculated based on a formula 2.

$$\text{Formula 2:} \quad F_{avg} = \frac{1}{M} \sum_{j=1}^{M} F(lng_j, lat_j)$$

In the formula 1 and the formula 2, $F(lng_j, lat_j)$ is an area popularity value of a $j^{th}$ area block; $x_i$ represents a training sample in the area block j; $W(x_i)$ represents a sample area popularity weight of a training sample in the area block j; $D(lng_j, lat_j)$ represents a training sample set associated with the $j^{th}$ area block; and $H(F(lng_j, lat_j))$ represents the monotonic decreasing function of the area popularity.

During specific implementation, the monotonic decreasing function may be represented as a formula 3 or a formula 4.

$$\text{Formula 3:} \quad H(F(lng_j, lat_j)) = \frac{1}{1 + e^{cF(lng_j, lat_j)}}$$

$$\text{Formula 4:} \quad H\left(F(lng_j, lat_j)\right) = 1 - \frac{e^{cF(lng_j, lat_j)} - e^{-cF(lng_j, lat_j)}}{e^{cF} + e^{-cF(lng_j, lat_j)}}$$

In the formula 3 and the formula 4, $F(lng_j, lat_j)$ is the area popularity value of the $j^{th}$ area block; and c is a coordination parameter that controls an urgency degree of a monotonic trend. Distribution of area popularity values is considered in setting of this parameter, and the setting of this parameter may be determined based on model training indicators, such as AUC and MAP. AUC is an indicator for measuring whether a categorization result is good or bad, and is used to evaluate categorization model; and MAP is an indicator for measuring whether sorting is good or bad.

By using the formula for calculating the sample area popularity weight, it can be learned that, for an area block whose area popularity value is relatively small, a weight of an associated sample is increased; and for an area block whose area popularity value is relatively large, a weight of an associated sample is reduced.

At step 220, the area popularity weight is determined as a sample weight of the training sample.

When the popularity indicator includes only the area popularity, the area popularity weight of the training sample is used as the sample weight of the training sample.

According to the sample weight setting method disclosed in this embodiment, the popularity indicator value of the training sample is obtained, then the area popularity weight of the training sample is determined based on each popularity indicator value, and the area popularity weight is determined as the sample weight of the training sample, thereby presenting an accurate search or recommendation result to a user. A sample weight of a sample is set with reference to a popularity indicator, so that a sample weight of a sample in a high-popularity area is properly reduced, thereby improving accuracy of a trained model, and further increasing accuracy of the search or recommendation result presented to the user.

A sample weight setting method disclosed according to still another embodiment of the present application is shown in FIG. 3. The method includes step 300 to step 320.

In this embodiment, an example in which popularity indicators include area popularity, category popularity, and time popularity is used, to describe a method for obtaining a value of the popularity indicator during model training, and a specific process of determining a single popularity indicator weight of a training sample based on the obtained value of the popularity indicator, and determining a weight of a sample based on the single popularity indicator weight.

At step 300, an area popularity value, a category popularity value, and a time popularity value of a training sample are obtained.

For a specific method for obtaining the training sample, refer to the foregoing embodiments. Details are not described herein again. In this embodiment of the present application, sample-associated information in obtained sample data includes: access traffic of a vendor or a product, access time information, access behavior, geographic location information of the vendor or the product, category information of the vendor or the product, and the like. During specific implementation, a specific solution for obtaining the values of the area popularity indicators of the training sample is described by using an example in which the geographic location information of the vendor is latitude and longitude coordinates.

During specific implementation, the obtaining an area popularity value of a training sample includes: assigning all training samples to corresponding area blocks based on a geographic location; and determining area popularity of each area block. For a specific implementation for obtaining the area popularity value of the training sample, refer to the foregoing embodiments. Details are not described herein again. If all training samples are distributed in $M_1$ area blocks, $M_1$ area popularity values $F_1(lng_j, lat_j)$ corresponding to the $M_1$ area blocks are obtained, where $1 \leq j \leq M_1$.

The obtaining a time popularity value of a training sample includes: assigning all training samples to corresponding time periods based on time; and determining time popularity of each time period. First, data structures of all training samples are parsed, and an overall time period covered by the training samples is determined based on access time information of each training sample; then, the overall time period is divided into a plurality of time periods according to a preset rule (for example, each time period includes seven days); and finally, time popularity of each time period is separately determined. During specific implementation, the time popularity value may be represented by using a plurality of types of data, for example, an access user quantity in a time period, a history access request quantity in the time period, and the like. A specific manner of determining the time popularity of each time period is not limited in the present application. If all training samples are distributed in $M_2$ time periods, $M_2$ area popularity values $F_2(Time_j)$ corresponding to the $M_2$ time periods are obtained, where $1 \leq j \leq M_2$.

The obtaining a category popularity value of a training sample includes: determining category popularity of each category based on all training samples. The category popularity of each category is a total quantity of vendors of the category or a history access quantity of the category. During specific implementation, first, data structures of all training samples are parsed, all product categories covered by the training samples are determined based on product category information of each training sample, and then the total quantity of vendors of each category or the history access quantity of the category are separately determined used as a category popularity value of the category. A specific manner of determining the category popularity value is not limited in the present application. If all training samples are distributed in $M_3$ categories, $M_3$ category popularity values $F_3(Pro_j)$ corresponding to the $M_3$ categories are obtained, where $1 \leq j \leq M_3$.

At step 310, an area popularity weight, a time popularity weight, and a category popularity weight are determined respectively based on the area popularity value, the time popularity value, and the category popularity value.

During specific implementation, during model training, determining, based on a value of each popularity indicator, a single popularity indicator weight of the popularity indicator corresponding to the training sample includes: determining the area popularity weight of the training sample based on a monotonic decreasing function of area popularity; determining the time popularity weight of the training sample based on a monotonic decreasing function of time popularity; and determining the category popularity weight of the training sample based on a monotonic decreasing function of category popularity.

For a specific implementation of determining the area popularity weight of the training sample based on a monotonic decreasing function of area popularity, refer to the foregoing embodiments, and details are not described herein again.

When the time popularity weight of the training sample is determined based on the monotonic decreasing function of the time popularity, a formula for calculating a sample time popularity weight may be represented as a formula 5.

$$\text{Formula 5:} \quad W_2(x_i) = H\left(F_2\left(Time_j\right)\right) \propto \frac{F_{2avg}}{F_2(Time_j)},$$

where $x_i$ is from $D(Time_j)$;
and $F_{2avg}$ is an average value of time popularity of all time periods, and may be calculated based on a formula 6.

$$\text{Formula 6:} \quad F_{2avg} = \frac{1}{M_2} \sum_{j=1}^{M_2} F_2\left(Time_j\right)$$

In the formula 5 and the formula 6, $F_2(Time_j)$ is a time popularity value of a $j^{th}$ time period; $x_i$ represents a training sample in the time period j; $W_2(x_i)$ represents a sample time popularity weight of a training sample in the time period j; $D(Time_j)$ represents a training sample set associated with the $j^{th}$ time period; and $H(F_2(Time_j))$ represents the monotonic decreasing function of the area popularity.

During specific implementation, for the monotonic decreasing function, refer to the monotonic decreasing function for calculating the area popularity. For example, the monotonic decreasing function may be represented as a formula 7.

$$\text{Formula 7:} \quad H(F_2\left(Time_j\right)) = \frac{1}{1+e^{cF_2\left(Time_j\right)}};$$

where $F_2(Time_j)$ is a time popularity value of the $j^{th}$ time period; and c is a coordination parameter that controls an urgency degree of a monotonic trend. For a specific setting method, refer to the method for setting the coordination parameter in the area popularity formulas.

When the category popularity weight of the training sample is determined based on the monotonic decreasing function of the category popularity, a formula for calculating a sample category popularity weight may be represented as a formula 8.

$$\text{Formula 8:} \quad W_3(x_i) = H\left(F_3\left(Pro_j\right)\right) \propto \frac{F_{3avg}}{F_3\left(Pro_j\right)},$$

where $x_i$ is from $D(Pro_j)$;
and $F_{3avg}$ is an average value of time popularity of all time periods, and may be calculated based on a formula 9.

$$\text{Formula 9:} \quad F_{3avg} = \frac{1}{M_3} \sum_{j=1}^{M_3} F_3\left(Pro_j\right)$$

In the formula 8 and the formula 9, $F_3(Pro_j)$ is a category popularity value of a $j^{th}$ category; $x_i$ represents a training sample in the category j; $W_3(x_i)$ represents a sample category popularity weight of a training sample in the category j; $D(Pro_j)$ represents a training sample set associated with the $j^{th}$ category; and $H(F_3(Pro_j))$ represents the monotonic decreasing function of the category popularity.

During specific implementation, for the monotonic decreasing function of the category popularity, refer to the monotonic decreasing function for calculating the area popularity, or refer to the monotonic decreasing function of the area popularity, and details are not described herein again.

By using the formula for calculating the single popularity indicator weight, it can be learned that, for an area block, a time period, or a category whose popularity indicator value is relatively small, a weight of an associated sample is increased; and for an area block, a time period, or a category whose single popularity indicator value is relatively large, a weight of an associated sample is reduced.

Using food search as an example, when there are relatively many superior vendors in a popular geographic area, behavior of clicking a presented vendor by a user is random to some extent, and therefore, for a collected training sample, many superior vendors may not be clicked. When relatively few feature dimensions of a vendor are described, a feature of a clicked sample may be the same as a feature of a sample that is not clicked. During the model training, a large quantity of feature vectors belongs to both a positive sample and a negative sample, causing the model training to be incorrect. Weights of the positive sample and the negative sample in an area, a period, or a category whose popularity is relatively high are properly reduced, to reduce impact caused by a large quantity of same feature vectors being annotated by using different labels during the model training, and strengthen a role played by a feature during the model training, to improve accuracy of the model training.

At step 320, a sample weight of the training sample is determined based on the area popularity weight, the time popularity weight, and the category popularity weight.

During specific implementation, a step of determining a sample weight of the training sample based on the single popularity indicator weights corresponding to all the popularity indicators includes: determining a product of the single popularity indicator weights corresponding to all the popularity indicators, and using the product as the sample weight of the training sample; or adjusting, based on the single popularity indicator importance, at least one of the single popularity indicator weights corresponding to the popularity indicators, and using, as the sample weight of the training sample, a product of the adjusted single popularity indicator weights corresponding to all the popularity indicators, where at least one of the single popularity indicator weights corresponding to the popularity indicators is adjusted, so that a ratio of the adjusted single popularity indicator weight corresponding to the popularity indicators to the sample weight of the training sample suits the single popularity indicator importance.

When the popularity indicators include the area popularity, the time popularity, and the category popularity, during specific implementation, a product of the area popularity weight, the time popularity weight, and the category popularity weight of the training sample may be used as the sample weight of the training sample. Using a training sample $x_i$ as an example, a sample weight of the training sample during model training is: $W_1(x_i) \times W_2(x_i) \times W_3(x_i)$, where $W_1(x_i)$ is equal to a sample area popularity weight of the training sample in an area block in which the training sample $x_i$ is located; $W_2(x_i)$ is equal to a sample time popularity weight of the training sample in a time period in which the training sample $x_i$ is located; and $W_3(x_i)$ is equal to a sample category popularity weight of the training sample in a category in which the training sample $x_i$ is located

When the single popularity indicator importance is preset based on a service requirement, the single popularity indicator weight is first adjusted based on the single popularity indicator importance, and then a product of adjusted single popularity indicator weights corresponding to all the popularity indicators is used as the sample weight of the training sample. For example, the single popularity indicator importance is set to that: a ratio of an area popularity indicator weight is greater than 80%, and a ratio of a time popularity indicator weight is less than 5%. In this case, during specific implementation, a product of the area popularity weight, the time popularity weight, and the category popularity weight is first calculated, and then a ratio of the area popularity weight and a ratio of the time popularity weight are separately determined. If the ratio of the area popularity weight is greater than 80%, and the ratio of the time popularity weight is less than 5%, the weights are not adjusted. If the ratio of the area popularity weight is less than or equal to 80%, and the ratio of the time popularity weight is less than 5%, the area popularity weight is increased by a proportion, such as 1.5 times, and then the ratio of the area popularity weight is calculated again, until the ratio of the area popularity weight exceeds 80%. Finally, a product of the adjusted area popularity weight, time popularity weight, and category popularity weight is used as the sample weight of the training sample. If the ratio of the area popularity weight is less than or equal to 80%, and the ratio of the time popularity weight is greater than 5%, the area popularity weight is increased by a proportion, and the time popularity weight is decreased by a proportion, for example, decreased to 4%, and then the ratio of the area popularity weight and the ratio of the time popularity weight are calculated again, until the ratio of the area popularity weight and the ratio of the time popularity weight suits the preset importance. Finally, a product of the adjusted area popularity weight, time popularity weight, and category popularity weight is used as the sample weight of the training sample.

Using an example in which a trained model is a linear model, the following describes an effect of the sample weight setting method in the present application based on logistic regression of the linear model.

A basic relationship of the logistic regression is as follows:

A linear boundary is a formula 10.

$$\text{Formula 10: } \theta_0 + \theta_1 x_1 + \theta_2 x_2 +, ...,+ \theta_n x_n = \sum_{i=1}^{n} \theta_i x_i = \vec{\theta}^T \vec{x}$$

A prediction function is a formula 11.

$$\text{Formula 11: } h(\vec{x}_i) = \frac{1}{1+e^{-\vec{\theta}^T \vec{x}_i}}$$

A loss function is a formula 12.

$$\text{Formula 12: } J(\vec{\theta}) = \frac{1}{n} \sum_{i=1}^{n} [y_i \log h(\vec{x}_i) + (1 - y_i) \log (1 - h(\vec{x}_i)] W(\vec{x}_i)$$

In the formula 10, 0 is a sample feature weight, $x$ is a feature value, n is a sample feature dimension, $\vec{x}$ is a sample vector, and $\vec{\theta}$ is a sample feature weight vector. The prediction function corresponds to a sample regression value. In the formula 12, y is an annotated sample label, a label of a positive sample is 1, and a label of a negative sample is 0. With continuous iteration of the loss function, the sample weight is accordingly updated, until the model converges, the positive sample regresses and approaches 1, and the negative sample approaches 0. It can be learned from the loss function that, when the model traverses and iterates a sample, a sample whose weight is larger has larger impact on a learning process of the model, and such a sample is learned more sufficiently. Therefore, after weights of samples are adjusted based on popularity, importances of those samples whose annotations are not accurate enough are reduced during the model training, that is, the accuracy of the model training is increased.

According to the sample weight setting method disclosed in this embodiment of the present application, the values of the popularity indicators of the training sample are obtained, then the single popularity indicator weight of the popularity indicator corresponding to the training sample is determined based on the value of each popularity indicator, and the sample weight of the training sample is determined based on the single popularity indicator weights corresponding to all the popularity indicators, thereby presenting the accurate search or recommendation result to the user. A sample weight of a sample is set with reference to a popularity indicator, so that a sample weight of a sample in a high-popularity area, time period, or category is properly reduced, thereby improving accuracy of the trained model, and further increasing accuracy of the search or recommendation result presented to the user.

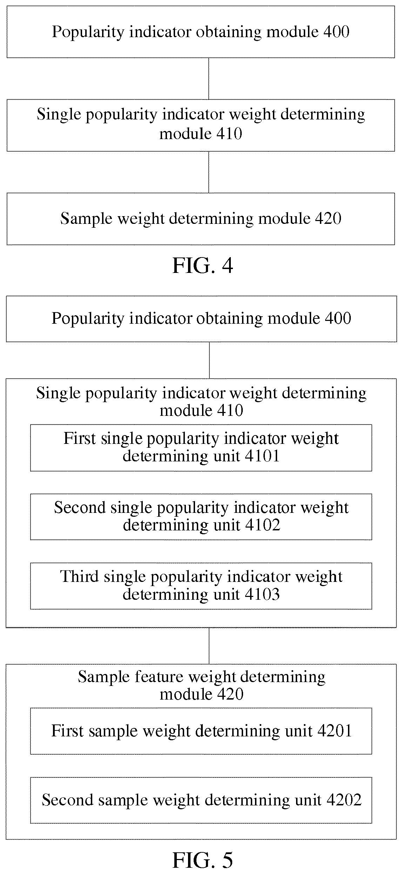

A sample weight setting device disclosed according to an embodiment of the present application is shown FIG. 4. The device includes:

> a popularity indicator obtaining module 400, configured to obtain values of popularity indicators of a training sample;
> a single popularity indicator weight determining module 410, configured to determine, based on a value of each popularity indicator, a single popularity indicator weight of the popularity indicator corresponding to the training sample; and
> a sample weight determining module 420, configured to determine a sample weight of the training sample based on the single popularity indicator weights corresponding to all the popularity indicators.

Optionally, the popularity indicators include: area popularity, time popularity, and category popularity.

Optionally, as shown in FIG. 5, the sample weight determining module 420 includes:

> a first sample weight determining unit 4201, configured to determine a product of the single popularity indicator weights corresponding to all the popularity indicators, and use the product as the sample weight of the training sample; or
> a second sample weight determining unit 4202, configured to adjust, based on a single popularity indicator importance, at least one of the single popularity indicator weights corresponding to the popularity indicators, and use, as the sample weight of the training sample, a product of the adjusted single popularity indicator weights respectively corresponding to all the popularity indicators.

The adjusting, based on the single popularity indicator importance, at least one of the single popularity indicator weights corresponding to the popularity indicators includes:
adjusting at least one of the single popularity indicator weights, so that a ratio of the adjusted single popularity indicator weight to the sample weight of the training sample suits the single popularity indicator importance.

When the popularity indicator includes the area popularity, optionally, as shown in FIG. 5, the single popularity indicator weight determining module 410 includes a first single popularity indicator weight determining unit 4101. The first single popularity indicator weight determining unit 4101 is configured to determine an area popularity weight of the training sample based on a monotonic decreasing function of the area popularity.

When the popularity indicator includes the time popularity, optionally, as shown in FIG. 5, the single popularity indicator weight determining module 410 includes a second single popularity indicator weight determining unit 4102. The second single popularity indicator weight determining unit 4102 is configured to determine a time popularity weight of the training sample based on a monotonic decreasing function of the time popularity.

When the popularity indicator includes the category popularity, optionally, as shown in FIG. 5, the single popularity indicator weight determining module 410 includes a third single popularity indicator weight determining unit 4103. The third single popularity indicator weight determining unit 4103 is configured to determine a category popularity weight of the training sample based on a monotonic decreasing function of the category popularity.

According to the sample weight setting device disclosed in this embodiment of the present application, the values of the popularity indicators of the training sample are obtained, then the single popularity indicator weight of the popularity indicator corresponding to the training sample is determined based on the value of each popularity indicator, and the sample weight of the training sample is determined based on the single popularity indicator weights corresponding to all the popularity indicators, thereby presenting the accurate search or recommendation result to a user. A sample weight of a sample is set with reference to a popularity indicator, so that a sample weight of a sample in a high-popularity area, time period, or category is properly reduced, thereby improving accuracy of the trained model, and further increasing accuracy of the search or recommendation result presented to the user.

Correspondingly, the present application further discloses an electronic device, including a memory, a processor, and a computer program that is stored in the memory and that can be run in the processor. The processor executes the computer program to implement the foregoing sample weight setting method. The electronic device may be a PC, a mobile terminal, a personal digital assistant, a tablet computer, or the like.

The present application further discloses a computer readable storage medium, storing a computer program. The computer program is executed by a processor to implement the foregoing sample weight setting method.

The embodiments in this specification are all described in a progressive manner. Descriptions of each embodiment focus on differences from other embodiments, and same or similar parts among respective embodiments may be mutually referenced. The device embodiments are basically similar to the method embodiments, and therefore the descriptions are relatively simple. For the associated part, refer to the method embodiments.

The sample weight setting method and device provided in the present application are described in detail above. Principles and implementations of the present application have been explained herein by using specific examples. The embodiments are used only to help understand the method and core thought of the present application. In addition, a person of ordinary skill in the art can have variations in specific implementations and the application scope based on thoughts of the present application. To conclude, the content of the specification should not be construed as a limitation to the present application.

Based on the foregoing descriptions of the embodiments, a person skilled in the art may clearly understand that the implementations may be implemented by software in addition to a necessary universal hardware platform or by hardware only. Based on such an understanding, the foregoing technical solutions essentially, or the part contributing to the existing technology may be reflected in a form of a software product. The computer software product may be stored in a computer readable storage medium, such as a ROM/RAM, a magnetic disc, or an optical disc, and includes several instructions for instructing a computer device (which may be a personal computer, a server, a network device, or the like) to perform the methods in the embodiments or some parts of the embodiments.

**Claims**

1. A sample weight setting method, comprising:

   obtaining values of popularity indicators of a training sample;
   determining, based on a value of each popularity indicator, a single popularity indicator weight of the popularity indicator corresponding to the training sample; and
   determining a sample weight of the training sample based on the single popularity indicator weights corresponding to all the popularity indicators.

2. The method according to claim 1, wherein the popularity indicators comprise: area popularity, time popularity, and category popularity.

3. The method according to claim 1 or 2, wherein determining the sample weight of the training sample based on the single popularity indicator weights corresponding to all the popularity indicators comprises:
   determining a product of the single popularity indicator weights corresponding to all the popularity indicators, and using the product as the sample weight of the training sample.

4. The method according to claim 1 or 2, wherein determining the sample weight of the training sample based on the single popularity indicator weights corresponding to all the popularity indicators comprises:

   adjusting, based on a single popularity indicator importance, at least one of the single popularity indicator weights corresponding to the popularity indicators, and using the single popularity indicator weight as the adjusted single popularity indicator weight corresponding to the popularity indicator; and
   using, as the sample weight of the training sample, a product of the adjusted single popularity indicator weights corresponding to all the popularity indicators.

5. The method according to claim 4, wherein adjusting, based on the single popularity indicator importance, the single popularity indicator weight corresponding to the popularity indicators comprises:
   adjusting, based on the single popularity indicator importance, the single popularity indicator weight corresponding to the popularity indicator, so that a ratio of the adjusted single popularity indicator weight to the sample weight of the training sample suits the single popularity indicator importance.

**6.** The method according to claim 2, wherein determining, based on the value of the popularity indicator, the single popularity indicator weight of the popularity indicator corresponding to the training sample comprises: determining an area popularity weight of the training sample based on a monotonic decreasing function of the area popularity.

**7.** The method according to claim 2, wherein determining, based on the value of the popularity indicator, the single popularity indicator weight of the popularity indicator corresponding to the training sample comprises: determining a time popularity weight of the training sample based on a monotonic decreasing function of the time popularity.

**8.** The method according to claim 2, wherein determining, based on the value of the popularity indicator, the single popularity indicator weight of the popularity indicator corresponding to the training sample comprises: determining a category popularity weight of the training sample based on a monotonic decreasing function of the category popularity.

**9.** A sample weight setting device, comprising:

a popularity indicator obtaining module, configured to obtain values of popularity indicators of a training sample;
a single popularity indicator weight determining module, configured to determine, based on a value of each popularity indicator, a single popularity indicator weight of the popularity indicator corresponding to the training sample; and
a sample weight determining module, configured to determine a sample weight of the training sample based on the single popularity indicator weights corresponding to all the popularity indicators.

**10.** The device according to claim 9, wherein the popularity indicators comprise: area popularity, time popularity, and category popularity.

**11.** The device according to claim 9 or 10, wherein the sample weight determining module comprises: a first sample weight determining unit, configured to determine a product of the single popularity indicator weights corresponding to all the popularity indicators, and use the product as the sample weight of the training sample.

**12.** The device according to claim 9 or 10, wherein the sample weight determining module comprises: a second sample weight determining module, configured to adjust, based on the single popularity indicator importance, at least one of the single popularity indicator weights corresponding to the popularity indicators; and use, as the sample weight of the training sample, a product of the adjusted single popularity indicator weights respectively corresponding to all the popularity indicators.

**13.** The device according to claim 12, wherein adjusting, based on the single popularity indicator importance, the single popularity indicator weight corresponding to the popularity indicators comprises: adjusting, based on the single popularity indicator importance, the single popularity indicator weight corresponding to the popularity indicator, so that a ratio of the adjusted single popularity indicator weight to the sample weight of the training sample suits the single popularity indicator importance.

**14.** The device according to claim 9, wherein when the popularity indicator comprises area popularity, the single popularity indicator weight determining module is further configured to determine an area popularity weight of the training sample based on a monotonic decreasing function of the area popularity.

**15.** The device according to claim 9, wherein when the popularity indicator comprises time popularity, the single popularity indicator weight determining module is further configured to determine a time popularity weight of the training sample based on a monotonic decreasing function of the time popularity.

**16.** The device according to claim 9, wherein when the popularity indicator comprises category popularity, the single popularity indicator weight determining module is further configured to determine a category popularity weight of the training sample based on a monotonic decreasing function of the category popularity.

**17.** An electronic device, comprising:

a memory;

a processor; and
computer programs stored in the memory and executable by the processor;
wherein the computer programs are executed by the processor to implement the sample weight setting method according to any one of claims 1 to 8.

18. A computer readable storage medium, storing computer programs, wherein the computer programs are executed by a processor to implement the sample weight setting method according to any one of claims 1 to 8.

Obtain values of popularity indicators of a training sample 100

Determine, based on a value of each popularity indicator, a single popularity indicator weight of the popularity indicator corresponding to the training sample 110

Determine a sample weight of the training sample based on the single popularity indicator weights corresponding to all the popularity indicators 120

FIG. 1

Obtain an area popularity value of a training sample 200

Determine an area popularity weight of the training sample based on the area popularity value 210

Determine the area popularity weight as a sample weight of the training sample 220

FIG. 2

Obtain an area popularity value, a category popularity value, and a time popularity value of a training sample 300

Determine an area popularity weight, a time popularity weight, and a category popularity weight respectively based on the area popularity value, the time popularity value, and the category popularity value 310

Determine a sample weight of the training sample based on the area popularity weight, the time popularity weight, and the category popularity weight 320

FIG. 3

```
┌─────────────────────────────────────────────┐
│   Popularity indicator obtaining module 400   │
└─────────────────────────────────────────────┘
                       │
┌─────────────────────────────────────────────┐
│  Single popularity indicator weight determining│
│                 module 410                    │
└─────────────────────────────────────────────┘
                       │
┌─────────────────────────────────────────────┐
│     Sample weight determining module 420      │
└─────────────────────────────────────────────┘
```

FIG. 4

```
┌─────────────────────────────────────────────┐
│   Popularity indicator obtaining module 400   │
└─────────────────────────────────────────────┘
                       │
┌─────────────────────────────────────────────┐
│  Single popularity indicator weight determining│
│                 module 410                    │
│  ┌─────────────────────────────────────────┐ │
│  │   First single popularity indicator weight│ │
│  │         determining unit 4101             │ │
│  └─────────────────────────────────────────┘ │
│  ┌─────────────────────────────────────────┐ │
│  │  Second single popularity indicator weight│ │
│  │         determining unit 4102             │ │
│  └─────────────────────────────────────────┘ │
│  ┌─────────────────────────────────────────┐ │
│  │   Third single popularity indicator weight│ │
│  │         determining unit 4103             │ │
│  └─────────────────────────────────────────┘ │
└─────────────────────────────────────────────┘
                       │
┌─────────────────────────────────────────────┐
│        Sample feature weight determining       │
│                 module 420                    │
│  ┌─────────────────────────────────────────┐ │
│  │  First sample weight determining unit 4201│ │
│  └─────────────────────────────────────────┘ │
│  ┌─────────────────────────────────────────┐ │
│  │ Second sample weight determining unit 4202│ │
│  └─────────────────────────────────────────┘ │
└─────────────────────────────────────────────┘
```

FIG. 5

# INTERNATIONAL SEARCH REPORT

International application No.

PCT/CN2017/119844

## A. CLASSIFICATION OF SUBJECT MATTER

G06F 17/30 (2006.01) i; G06Q 30/02 (2012.01) i

According to International Patent Classification (IPC) or to both national classification and IPC

## B. FIELDS SEARCHED

Minimum documentation searched (classification system followed by classification symbols)

G06F; G06Q

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 样本, 权重, 训练, 热度, 指标, 区域, 时间, 品类, 乘积, 重要程度, 调整, 比例, 单调递减函数, sample?, weight?, train+, hot+, criterion?, region?, area?, time, categor???, class??, product?, significance, importance, adjust+, ratio, proportion, monotone decreasing function

## C. DOCUMENTS CONSIDERED TO BE RELEVANT

| Category* | Citation of document, with indication, where appropriate, of the relevant passages | Relevant to claim No. |
|---|---|---|
| X | CN 104077306 A (ALIBABA GROUP HOLDING LIMITED), 01 October 2014 (01.10.2014), description, paragraphs [0066]-[0085] and [0140] | 1-2, 6-10, 14-18 |
| A | CN 104915734 A (TENCENT INC.), 16 September 2015 (16.09.2015), entire document | 1-18 |
| A | CN 106022865 A (JIANGSU UNIVERSITY), 12 October 2016 (12.10.2016), entire document | 1-18 |
| A | CN 105653683 A (NEUSOFT CORPORATION), 08 June 2016 (08.06.2016), entire document | 1-18 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March 2018 | 03 April 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WEI, Jingyao Telephone No. (86-10) 010-53961340 |
|---|---|

Form PCT/ISA/210 (second sheet) (July 2009)

## INTERNATIONAL SEARCH REPORT
### Information on patent family members

International application No.

PCT/CN2017/119844

| Patent Documents referred in the Report | Publication Date | Patent Family | Publication Date |
|---|---|---|---|
| CN 104077306 A | 01 October 2014 | WO 2014160648 A1 | 02 October 2014 |
|  |  | TW 201437933 A | 01 October 2014 |
|  |  | JP 2016511906 A | 21 April 2016 |
|  |  | US 2014297476 A1 | 02 October 2014 |
| CN 104915734 A | 16 September 2015 | None |  |
| CN 106022865 A | 12 October 2016 | None |  |
| CN 105653683 A | 08 June 2016 | None |  |

Form PCT/ISA/210 (patent family annex) (July 2009)

**EP 3 617 909 A1**

**REFERENCES CITED IN THE DESCRIPTION**

**Patent documents cited in the description**

- CN 201710370473